Europäisches Patentamt

(19) **European Patent Office**

Office européen des brevets

(11) Publication number: **0 009 279**
**A1**

(12) # EUROPEAN PATENT APPLICATION

(21) Application number: **79200495.4**

(22) Date of filing: **06.09.79**

(51) Int. Cl.³: **B 65 G 49/00,** B 65 G 25/00,
A 23 C 19/14

(30) Priority: **07.09.78 GB 3590578**

(43) Date of publication of application: **02.04.80**
**Bulletin 80/7**

(84) Designated Contracting States: **AT BE CH DE FR GB IT
NL SE**

(71) Applicant: **Gasbjerg, Knud, Grundtvigsvej 8, DK-8600
Silkeborg (DK)**

(72) Inventor: **Gasbjerg, Knud, Grundtvigsvej 8, DK-8600
Silkeborg (DK)**

(74) Representative: **Mensen, Herbert, Ir. et al,
Octrooibureau Polak & Charlouis Laan Copes Van
Cattenburch 80, NL-2585 GD Den Haag (NL)**

(54) **A system for conveying and storing newly pressed cheeses, preferably in connection with a brine curing apparatus.**

(57) A system for conveying and storing newly pressed
cheeses (6), comprising a plurality of shelves made as
conveyor units each comprising a row of crosswise dispo-
sed carrier bars (24, 28), of which some are cyclically mo-
vable so as to cause the cheeses (6) to be displaceable
along the shelf structure. The cheeses (6) may thus be fed
to and moved away from respective storing positions on
the shelves by the conveyor action of the shelves themsel-
ves, and during the storing whether in air or in a liquid the
cheeses (6) may be slowly reciprocated to avoid surface
deformation thereof and allow free access to all. surface
portions thereof. When used in combination with a brine
vat (2) the conveyor shelves will support the underlying
cheeses (6) because of their buoyancy in the brine, but the
cyclically movable bars (28) act as a conveying means on
both the top side and the underside of the shelf, to enable
reciprocation even of cheeses (6) submerged in brine.

ACTORUM AG

-1-

A system for conveying and storing newly pressed cheeses, preferably in connection with a brine curing apparatus.

The present invention relates to a system for conveying and storing newly pressed cheesses.

In cheese production, newly pressed cheeses are normally rather difficult to handle automatically during the following operations, partly because the cheese members are rather soft and partly because by the following treatments free access should be secured to all surface portions of the cheeses. Thus, as well known, the cheeses in a cheese store should be regularly turned on the shelves a.o. for giving access of air to the former undersides of the cheeses. When the cheeses are brine cured, prior to their storage, they shall be moved so as to ensure that no surface portions are steadily covered by the cheese touching other cheeses or some brine vat portion or portion of support or conveyor means. It is possible to support the cheeses against narrow ribs to keep exposed most of the supported surface, but still non-exposed areas will exist (though narrow), and besides

-2-

the soft cheese will not normally be supportable by narrow surface portions during any considerable time without getting locally deformed.

The cheese processing units such as brine vats and shelf stores are normally large units which shall hold a high number of cheeses, and these should be conveyed not only generally to and from the units, but even inside the units to be positioned therein, i.e. in an automatic system the units shall comprise both conveyor means and support means for the cheeses during the respective treating phases. Normally the cheeses may well be conveyed on usual conveyor belts, but these are unusable for supporting the cheeses during the treatment because they cover a part of the cheese surface. A better solution would be the use of driven conveyor rollers, but such conveyors are expensive and unsuitable also for other reasons, of which an important one is that in case of stillstanding or very slowly rotating rollers the soft cheeses may deform themselves against the roller surface, whereby they may get blocked against further conveying. Even a slight deformation or setting of this type may show this unlucky effect.

It is the purpose of the invention to provide a system which is advantageously usable as a combined conveyor and processing support for the cheeses.

According to the invention this is obtained by means of a system designed as stated in the characterizing clause of claim 1. When the two sets of cross bars are moved the cheeses will during each movement cycle be supported by a first set of bars, then be lifted off this support by the other set of bars now supporting the cheeses, then be moved together with this support a short distance along the conveyor and thereafter be redeposited on the bars of the first set in another position thereon, whereafter the other set of bars is moved back to its initial position out of touch with the cheeses. Thus, the bars of each set should be located with sufficiently small spacing to ensure a safe support of the soft cheeses solely by one set of bars, though twice during the operation cycle a situation will exist in which the cheeses are supported by the bars of both sets; the system may be controlled such that the bars are maintainable in these aligned positions during time intervals of desired lengths while the cheeses are resting in the respective processing unit.

The system according to the invention will not, in a reasonable design, be able to impart to the cheeses any imposing conveying velocity, but this will be neither desired nor necessary when the system is combined with a processing unit. It is much more important that it is possible, with the system according to the invention, to enable the cheeses to be steadily moved into new support positions in a simple manner, whereby any durable support deformation is counteracted and access is provided generally to all surface portions of the cheeses, because the cheeses will not steadily be supported by the same surface portions. Both of these effects are extremely important, since from a conveying point of view a safe conveying will be obtained even if the cheeses are to some degree deformed by their engaging the cross or carrier bars, because they are merely lifted off from their engagement therewith, almost without any friction, and brought to a new position, while from a treating point of view this will automatically involve that no surface portion is steadily covered by the support means. Should even a slight local deformation occur, such deformation will normally be smoothened by the cheese gradually being supported by many different surface portions thereof. Thus, even from a pure processing point of view the conveying of the cheeses is important for steadily uncovering the covered surface areas, and it is preferred, therefore, to make the conveyor means operative at low speed and for short distance reciprocation of the cheeses during the very treating operation in the processing unit.

The system according to the invention is highly applicable in connection with cheese processing in both liquid and gaseous surroundings, e.g. for water cooling of the cheeses and for general storage in a cheese store. It is an extremely important aspect of the invention that the system is applicable with special advantages in a brine treating unit of the type in which the cheeses are entirely submerged in brine. In this connection there is the special circumstance that the cheeses are subjected to a substantial buoyancy whereby they seek upwardly, and when they have been moved into the space between two conveyors, by the action of the lowermost conveyor, and these conveyors are submerged in brine, the cheeses will then by said buoyancy get lifted

BAD ORIGINAL

-5-

to engage the underside of the upper conveyor; each of the conveyors are easily so adapted that the described mutual motion between the two sets of cross bars will be the same when seen both from the top side and from the bottom side thereof, with the exception that the conveying direction of the underside will be opposite to that of the top side, when the movable bars are moved in a continuous cyclic manner. Hereby the various circumstances with respect to the access to all surface portions, the conveying function, and the possible surface deformation will be practically the same whether connected with a gravity support against the conveyor top side or a buoyancy support against the underside of the conveyor. Upon termination of the brine treatment the conveyors may be removed from the brine (or inversely), whereby the cheeses will be lowered onto the lowermost conveyor of the respective pair of conveyors and thereby be conveyable in air surroundings for delivery from the processing unit as described above.

In the following the invention will be described in more detail with reference to the accompanying drawing, in which:-

Fig. 1 is a perspective view of a combined cheese conveyor and liquid treating unit according to the invention,

Fig. 2 is a sectional side view thereof,

Fig. 3 is a side view of a detail thereof, and

Fig. 4 is a schematic side view of a combined cheese conveyor and storing system according to the invention.

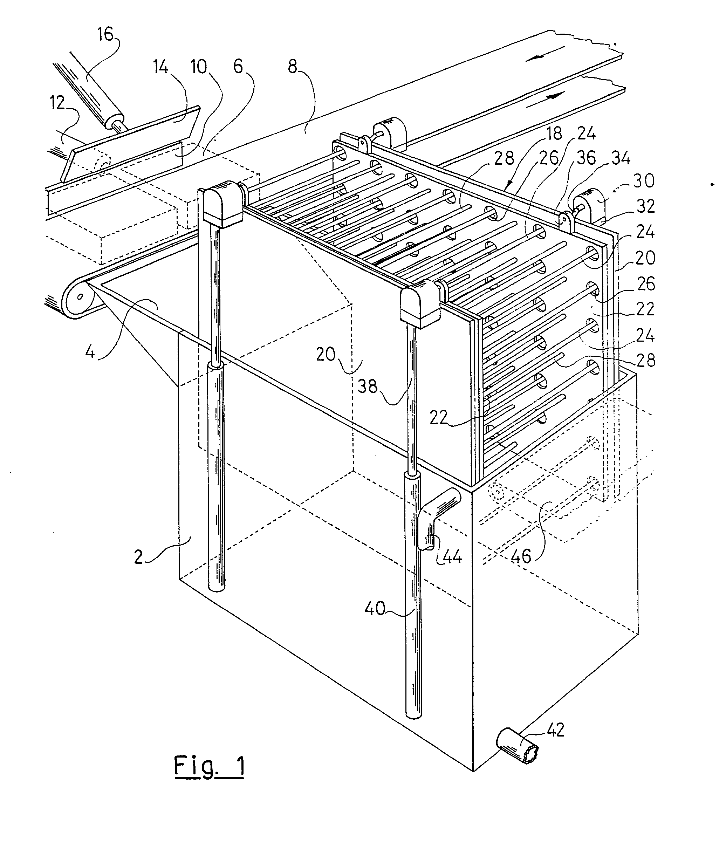

The unit shown in Fig. 1 comprises a stationary vat 2,

-6-

the upper front end of which (shown at the rear left side) is shaped as a projecting ramp portion 4 for receiving cheese members 6 as supplied on a belt conveyor 8 from a demoulding station (not shown) for newly pressed cheeses. The cheese members 6 as hereby successively conveyed to a transfer position on the belt 8 in front of the ramp 4 are movable by a pusher plate 10 moved by a cylinder 12 so as to be pushed laterally off the belt 8 onto the ramp 4, and thereafter the cheeses can be further pushed down along the ramp by means of another pusher plate 14 moved by a cylinder 16 which is inclined according to the inclination of the ramp.

A conveyor and storage unit 18 is shown partly lowered into the vat and comprises two opposed outer side plates 20 and two opposed inner side plates 22. The outer plates 20 are rigidly interconnected by means of a plurality of carrier cross bars extending through relatively large holes 26 in the inner plates and mounted with mutual spacing in both vertical and horizontal rows, viz. in a plurality of horizontal layers. The opposed inner plates 22 are correspondingly interconnected by way of a plurality of cross carrier bars 28 generally mounted between the bars 24 in the same horizontal levels as these. The inner plates 22 are connected with the respective outer plates 20 through an eccentric drive connection which in the example shown comprises four upper gear motors 30 each mounted on a laterally projecting carrier member 32 adjacent a respective end of the outer plate 20 and having a crank shaft 34, the outer end of which is received in a bearing in a bracket member 36 projecting upwardly from the inner plate 22. In operation the four gear motors 30 are synchronized such that they cause the two sets of interconnected plates and bars to move paracyclically relative each other, whereby the bars 24 will - relatively - move in a circular path along the periphery of the holes 26 in the inner plates 22.

The carrier members 32 of the gear motors 30 are supported on the upper ends of respective vertical piston rods 38 belonging to stationary hydraulic cylinders 40 mounted against the outer wall of the vat and thus operable to raise and lower the entire unit 18 up and down in the vat 2. The cylinders are operatively connected with control means for effecting stepwise vertical movement of the unit 18 corresponding to the distance between the consecutive layers of cross bars 24 and 28.

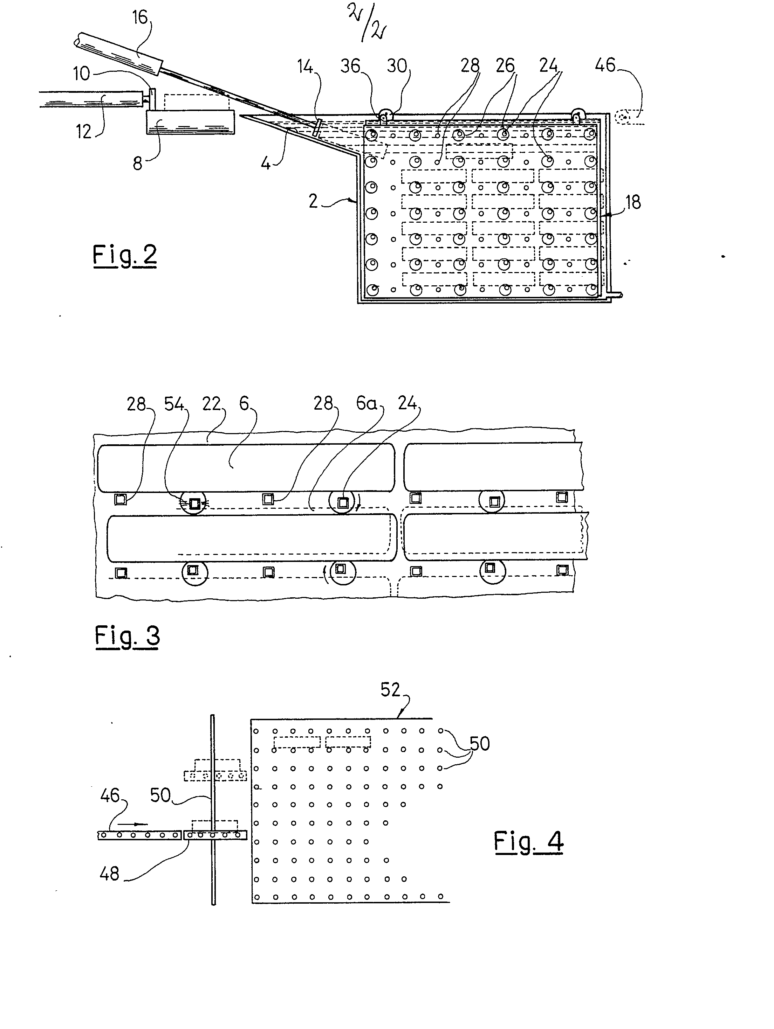

The vat 2 is filled with a liquid, either cooling water or brine, the vat having a bottom connector tube 42 and a top tube 44 connected in a supply and drain system for the particular liquid through suitable valves or pumps (not shown). The liquid fills the vat almost entirely, thus also the ramp portion 4, see Fig. 2.

In an initial position the unit 18 may be raised to a level in which the lowermost layer of cross bars 24, 28 is located just underneath the level of the lower end of the ramp 4, whereby cheese members 6 are introduceable into the space between the two lowermost bar layers by means of the pusher plates 10 and 14 (or any other suitable feeding arrangement). As more and more cheeses are successively introduced the cheeses will gradually push the preceding cheeses further along the said space until the cheeses fill out the length thereof. Thereafter the cylinders 40 are actuated to lower the unit 18 to bring the next space between the cross bar layers to communicate with the inlet means adjacent the ramp 4, and so forth until the entire unit 18 is filled with cheeses and is almost entirely submerged in the liquid. During the filling and lowering of the unit the liquid is drained off to maintain a constant high level in the vat.

In Fig. 3, in which the bars are shown with their preferred sectional shape as square tubes, is illustrated in the top part of the figure that cheeses 6 rest on the cross bars 28 while the bars 24 are moving downwardly and towards the left as shown by an arrow; in the system according to Fig. 1 the real motion will be inverted because the bars 24 will be stationary while the inner plates 22 with the bars 28 will be moved cyclically in the direction of the arrow, but the result of the motion will be the same. When during their continued movement the bars 24 are lifted up to and beyond the level defined by the bars 28, as illustrated in the lower half of Fig. 3, the cheeses 6 will thereby be lifted off from the bars 28 and be carried on the bars 24 and moved together with these a short distance to the right until they are again deposited on the bars 28, i.e. by a conveying movement which is substantially shorter than the distance between the consecutive bars 24 and 28.

As the cheeses 6 are left into the unit 18 with the vat 2 filled with cooling water the cheeses will rest on the various conveyors and be moved towards the right on and by these, whereby for each cheese receiving conveyor there will be provided space for reception of new cheeses at the front end of the conveyor. When a conveyor has been filled the unit 18 is lowered a step and the next conveyor is filled. In the embodiment shown it is not only the receiving conveyor which seeks to move the cheeses, because the cross bars of all conveyors are mutually moved at the same time. Thus, the cheeses on the already filled and submerged conveyors will be subjected to displacement forces towards the right, but hereby the cheeses at the right hand end will abut the corresponding end wall of the vat 2, whereafter the cross bars of these conveyors will carry out their relative movement sliding along the undersides of the cheeses without being able to move the cheeses, but also without damaging the cheeses, because the submerged cheeses rest with a very light pressure on the cross rods. Besides, the filling of the unit with cheeses does not take very long time.

When the unit 18 is filled and the cheeses shall remain submerged during a considerable interval of time the motors 30 are caused to work at low speed and in a steadily reversing manner so as to cause the cheeses to be reciprocated on the single conveyors, whereby they will steadily change their areas of engagement with the cross bars to counteract permanent surface deformations.

At the end of the treating time in the vat 2 the unit 18 is lifted off the vat in a stepwise manner. As indicated in Figs. 1 and 2 there is provided at the rear upper end of the vat 2 a conveyor 46 which is able to receive the cheeses from the unit conveyors as these are successively lifted up from the vat and the vat end wall no longer prevents the cheeses from leaving the respective conveyor. Hereby the unit 18 may be emptied successively and the cheeses moved away to some other processing unit, e.g. a storage as described in connection with Fig. 4.

If the vat 2 is a brine vat or is used both for cooling water and thereafter for brine the cheeses will now seek to float on the brine in which there is a considerable buoyancy. However, in practice this will mean that the cheeses will engage the lower side of their respective overhead conveyors in the unit 18 with a force which roughly corresponds to their resting force against their respective conveyors in the water filled vat. Since now the cross bars 24 and 28 are of equal shapes and are moved mutually in a symmetric manner about the horizontal middle plane of each respective conveyor in the unit 18 the support and conveying conditions will be just the same for cheeses engaging the underside as for those on the top side of the conveyors with the exception that the conveying directions will be opposite to each other. However, a desired conveying direction along the underside is of course still obtainable by suitable control of the motors 30 or other means for causing the mutual cyclic movement of the two sets of bars 24 and 28.

In Fig. 3 is shown in dotted lines that cheeses 6a are supportable against the underside of a conveyor, and it will be appreciated that these cheeses will be conveyable just as described above, i.e. during the brine treatment the cheeses may be reciprocated for counteracting of surface deformations and for securing admittance of brine to all surface portions of the cheeses.

When the cheeses should be removed from the brine vat 2 this removal may take place exactly as described above, because when a conveyor is lifted off the brine the cheeses supported by the underside thereof will sink down onto the underlying conveyor and thus be movable onto the outlet conveyor 46 just as when delivered from the cooling water vat. The only difference is that during the outlet operation of the cross bars the conveying direction of the active conveyors down in the brine will be opposed to that of the effective outlet conveyor, because down in the brine the cheeses still engage the underside of the conveyors. These cheeses, therefore, will be stopped by the front wall of the vat, without being damaged by the operation of the conveyors, while the upper cheeses leave the unit 18 across the rear wall thereof. If necessary the pusher plate 14 may hereby assume its front position in order to prevent cheeses from being conveyed forwardly into the ramp section 4 of the vat.

The stationary outlet conveyor 46 may be of any suitable type, e.g. designed as a single conveyor of the type incorporated in the unit 18. Such a design is shown in Fig. 4 which to the left shows the delivery end of such a single conveyor 46.

The described use of the system according to the invention in connection with the brine treatment of cheeses is considered to be an extremely important aspect of the invention, because in the past many difficulties have been experienced in attempts to handle the cheeses automatically in this important production phase of the pressed cheeses. It will be appreciated, however, that there are other important aspects, of which one will now be described with reference to Fig. 4.

In Fig. 4 it is shown that the delivery end of the said conveyor 46 communicates with a short conveyor 48 of the same or any other suitable type and mounted height adjustably between vertical side guides 50 and connected with control means (not shown) for raising and lowering the conveyor 48 between the receiver position shown in full lines and a plurality of different height positions in which it cooperates with respective conveyors 50 arranged in different levels in a cheese store 52, said conveyors 50 being constituted by cross bars 24, 28 just as in the unit 18 of Figs. 1-2. The conveyor 48, having its own drive motor (not shown) is thus operable to bring cheeses received from the conveyor 46 to any of the store conveyors 50, these being of substantial length so as to substitute the shelf system of an ordinary cheese store. Once the cheeses 6 are brought onto the front ends of the conveyors 50 and moved further on and by these conveyors into respective temporary storing positions thereon the processual storing of the cheeses may then take place while the cheeses are slowly reciprocated as described above in connection with the unit 18, such that surface deformations are counteracted and all cheese surface portions even on the undersides are gradually exposed to the surrounding conditioned storage atmosphere.

When the cheeses have been stored and cured as required they will be easy to let out from the store 52 at the opposite end thereof by means of a lift conveyor corresponding to the conveyor 48 or with the use of inclined conveyor ramps or other suitable outlet means. In connection with such an emptying of the store 52 or a corresponding transfer of cheeses from one store section into another, e.g. having a different conditioned atmosphere, the conveyors 50 are usable as real conveyors, i.e. they constitute both suitable storage shelves and suitable inlet and outlet conveyors.

Even though the described surface deformation of the cheeses may be counteracted by causing them to be reciprocated in the conveyors 50 it may nevertheless still be desirable to effect a turning of the cheeses, because during the storing they tend to flow out at their lower ends. Without here describing any particular turning arrangement it should be mentioned, however, that a turning is easily obtained with the use of automatic turning means arranged between the outlet end of a store section 52 and the inlet end of a similar store section.

In a preferred practical embodiment of the invention also pertaining to the unit 18 shown in Figs. 1-2 the drive mechanism for mutually moving the cross bars 24 and 28 is

-14-

adapted so as to effect a substantially rectangular movement in stead of a circular movement, but it is deemed unnecessary at this place to describe such a movement system
in more detail.

Especially in the store 52 according to Fig. 4 it may
be advantageous to make the single conveyors 50 individually controllable, such that any selected conveyor may
effect a relatively rapid conveying movement while the other
conveyors cause their cheeses to be reciprocated slowly or
even stand still. Of course this will be achievable by designing the various conveyors 50 as individual units just
as the short conveyor 48 (Fig. 4).

For producing the desired paracyclic movement of some
of the cross bars these may be arranged in fixed eccentric
positions on rotating carrier wheels, driven e.g. by a chain,
whereby the cross bars will rotate simultaneously with their
paracyclic movement.

Finally it should be mentioned that it may be highly
advantageous to make use of tubular cross bars provided
with side holes or nozzles and endwise connected with a
pressurized source of a medium to be sprayed or blown out
through these holes or nozzles. In Fig. 3 the bars are
shown as tubes, of which those designated 24 are provided
with side holes 54. These tubes 24 may all at one end be
connected with a common pressure chamber, viz. if one or
both of the associated side plates 20 (Fig. 1) are made as
a double wall element having an inner cavity which, in a
manner not shown, is connected to a pressurized medium

0009279

-15-

source through a pipe or a flexible hose. In the system according to Figs. 1-2 the medium may be cooling water or brine, whereby an advantageous flow of the respective fluid is created immediately next to the surface of the cheeses, while in the cheese store system according to Fig. 4 the medium may be air conditioned in any desired specific manner.

The side holes 54 will be advantageous even for introducing cleaning water or any cleansing fluid into the entire system when this is to be cleaned between consecutive operations.

-16-

C L A I M S :

1.    A system for conveying and storing newly pressed cheeses, for use primarily in a brining apparatus, characterized by a plurality of substantially horizontally disposed cheese conveyors arranged vertically above each other and each comprising a system of horizontal cross bars which are alternatingly endwise connected with respective carrier means arranged so as to be mutually movable in such a manner that a first set of cross bars is paracyclically movable relative another set of intermediate cross bars such that the two sets of bars during said movement constitute alternating support grids for the cheeses and effect displacement of the cheeses along the respective conveyor.

2.    A system according to claim 1, characterized in that the cross bars of a first set in one, some or all of the conveyors are all endwise secured to a commom side carrier member while the second set of bars is correspondingly carried by opposed commom side carrier members, arrestable driving means being arranged between the respective two sets of carrier members for effecting a paracyclic movement therebetween.

3.    A system according to claim 1 or 2, characterized in that the cross bars of the respective sets are uniformly shaped and symmetrically movable in such a manner that during their relative movement they will each in an alternating manner constitute a support means for the cheeses even when these are urged against the underside of the

-17-

conveyors.

4.     A system according to claim 1, 2 or 3, characterized in that a unit comprising a plurality of preferably equally long conveyors is mounted stepwise lowerable into a stationary vat.

5.     A system according to claim 4, characterized in that the vat is associated with means for pushing cheese members from an outer supply conveyor into the space between two conveyors of said unit in each step position thereof.

6.     A system according to claim 4 or 5, characterized in that the means for effecting said paracyclic movement are arrestable and reversible.

7.     A system according to claim 5 and 6, characterized in that adjacent the upper edge of the vat, opposite to said supply conveyor, there is arranged a conveyor operable to receive the cheeses from the unit and carry them away from the vat.

8.     A system according to any of the preceding claims, characterized in that at least some of at least one of the sets of cross bars are made as tubes provided with outlet holes or nozzles along the length thereof and are endwise connected with means for supplying a gaseous or liquid fluid to be dispensed through said holes or nozzles.

9.     A system according to claim 2 and 8, characterized in that at least one of said side carrier members is constituted by a hollow, flat box structure communicating with the tubular bars and with an inlet source for said fluid.

-18-

10.    A system according to claim 1, 2, 8 or 9, characterized in constituting a cheese store of a substantial di-
mension in the longitudinal direction of the conveyors.

0009279

1/2

Fig. 1

Fig. 2

Fig. 3

Fig. 4

# 0009279

European Patent
Office

## EUROPEAN SEARCH REPORT

Application number

EP 79 200 495.4

| | DOCUMENTS CONSIDERED TO BE RELEVANT | | CLASSIFICATION OF THE APPLICATION (Int. Cl.3) |
|---|---|---|---|
| Category | Citation of document with indication, where appropriate, of relevant passages | Relevant to claim | |
| | AT - B - 170 954 (G. FALK)<br>* page 1, lines 43 to 50; fig. 1 and 2 *<br><br>-- | 1-3 | B 65 G 49/00<br>B 65 G 25/00<br>A 23 C 19/14 |
| | DE - A1 - 2 532 157 (W.E. HAAS)<br>* page 1, line 1 to page 3, line 11 *<br><br>-- | 1,2 | |
| A | FR - A7 - 2 328 354 (GILCA)<br>* complete document *<br><br>-- | 1 | TECHNICAL FIELDS SEARCHED (Int.Cl.3)<br><br>A 23 C 19/00<br>B 65 G 1/00<br>B 65 G 25/00<br>B 65 G 49/00 |
| A | US - A - 4 068 014 (H.H. HEIMBRUCH)<br>* complete document *<br><br>-- | 1 | |
| A | US - A - 3 881 035 (W.H. TATE)<br>* complete document *<br><br>---- | 1 | |

CATEGORY OF CITED DOCUMENTS

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

| X | The present search report has been drawn up for all claims | | |
|---|---|---|---|
| Place of search<br>Berlin | Date of completion of the search<br>05-12-1979 | Examiner<br>SIMON | |

EPO Form 1503.1  06.78